(19) Europäisches Patentamt / European Patent Office / Office européen des brevets

(11) **EP 4 203 334 A1**

(12) **EUROPÄISCHE PATENTANMELDUNG**

(43) Veröffentlichungstag:
**28.06.2023  Patentblatt 2023/26**

(21) Anmeldenummer: **22211449.8**

(22) Anmeldetag: **05.12.2022**

(51) Internationale Patentklassifikation (IPC):
*H04B 7/015* (2006.01)    *H04J 3/06* (2006.01)

(52) Gemeinsame Patentklassifikation (CPC):
**H04B 7/015; H04J 3/0608**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **22.12.2021  AT 510332021**

(71) Anmelder: **Frequentis AG**
**1100 Wien (AT)**

(72) Erfinder: **REISENBAUER, Andreas**
**1020 Wien (AT)**

(74) Vertreter: **Wildhack & Jellinek**
**Patentanwälte OG**
**Landstraßer Hauptstraße 50**
**1030 Wien (AT)**

(54) **VERFAHREN ZUR BESEITIGUNG VON ECHO BEI DER WIEDERGABE VON ÜBER EINEN FUNKKANAL GESENDETEN FUNKSIGNALEN**

(57)    Die Erfindung zeigt ein Verfahren (100) zur Beseitigung von Echo bei der Wiedergabe von über einen Funkkanal gesendeten Funksignalen (3) und ein System (200) zur Ausführung des Verfahrens (100), bei dem ein von einem Sender (5) gesendetes Funksignal (3) durch zumindest eine erste Basisstation (2a) als erstes Audiosignal (6a) und durch zumindest eine zweite Basisstation (2b) als zweites Audiosignal (6b) empfangen wird, die empfangenen Audiosignale (6, 6a, 6b) über ein IP-Netzwerk (7) zur Wiedergabe an eine Leitwarte (8) gesendet werden, und wobei das erste und zweite Audiosignal (6a, 6b) zu unterschiedlichen Zeitpunkten oder mit einer Zeitverschiebung (10) in der Leitwarte (8) eintreffen und vor deren Wiedergabe in der Leitwarte (8) eine Ähnlichkeitsanalyse durchlaufen, um bei festgestellter Ähnlichkeit zwischen erstem Audiosignal (6a) und zweitem Audiosignal (6b) das in beiden enthaltene Funksignal (3) ohne Echo wiederzugeben.

Fig. 1

## Beschreibung

Die vorliegende Erfindung betrifft ein Verfahren zur Beseitigung von Echo bei der Wiedergabe von Funksignalen, welche über einen Funkkanal gesendet wurden und durch zumindest eine erste und zweite Basisstation aufgezeichnet wurden.

Zudem betrifft die vorliegende Erfindung ein System zur Durchführung des Verfahrens.

## Stand der Technik

Insbesondere bei der Kommunikation im Ultrakurzwellen-Seefunk werden entlang der Küstenlinie mehrere Basisstationen zum Empfang der von Schiffen abgesetzten Funksignale eingesetzt, um eine möglichst vollständige Abdeckung des zu überwachenden Seebereichs sicherzustellen. Die Basisstationen sind dabei entlang der Küstenlinie so positioniert, dass sich ein Sender eines Funksignals immer im Empfangsbereich zumindest einer Basisstation befindet. Wenn sich ein im zu überwachenden Seebereich befindlicher Sender gleichzeitig im Empfangsbereich von mehreren Basisstationen befindet, so kann es dazu kommen, dass das Funksignal von den mehreren Basisstationen empfangen wird, wobei alle von den Basisstationen empfangenen Audiosignale im Wesentlichen gleichzeitig an eine Leitwarte weitergeleitet werden.

Aufgrund der besseren Übertragungsqualität hat sich die digitale Übertragung von empfangenen Audiosignalen von einer Basisstation an eine Leitwarte über ein IP-Netzwerk bewährt. Im Gegensatz zu analog übertragenen Signalen, die im Falle von Störungen gar nicht, nur teilweise oder mit schlechter Qualität übertragen werden, können digitale Signale stets mit hoher Qualität übertragen werden, wobei die Übertragung allerdings durch Latenzen oder Störungen zeitverzögert erfolgen kann.

Insbesondere wenn die von den Basisstationen empfangenen Audiosignale über ein IP-Netzwerk an eine Leitwarte gesendet werden, ist die Laufzeit der Datenpakete über das IP-Netzwerk von verschiedenen Faktoren (wie etwa der Verbindungsqualität) abhängig und kann je nach Standort der Basisstation variieren. Wird nun ein Funksignal von mehreren Basisstationen empfangen und die entsprechenden Audiosignale von diesen im Wesentlichen zeitgleich an die Leitwarte über das IP-Netzwerk gesendet, so kann es zu unterschiedlichen Laufzeiten der Audiosignale über das IP-Netzwerk kommen. Die beiden Audiosignale, welche dasselbe Funksignal enthalten, treffen dann zu unterschiedlichen Zeitpunkten bzw. mit einer Zeitverzögerung zueinander zur Wiedergabe in der Leitwarte ein und können so bei Wiedergabe zu einer störenden Überlagerung bzw. einem Echo führen.

Aus dem Stand der Technik sind beispielsweise Verfahren zur Vermeidung von Überlagerungen bei der Wiedergabe von Sprechfunksignalen bekannt. So offenbart AT 522 205 A1 etwa ein Verfahren, in dem bei gleichzeitigem Empfang von zwei Sprechfunkmeldungen eine zwischengespeichert wird und nach erfolgreicher Wiedergabe der ersten ausgegeben wird. Derartige Verfahren sind jedoch nur zur überlagerungsfreien Wiedergabe von unterschiedlichen bzw. unabhängigen Sprechfunksignalen geeignet. Bei der Überlagerung von Audiosignalen durch ein und dasselbe Funksignal würde dies zu einer mehrfach wiederholten Wiedergabe führen, was allerdings ungewünscht ist und die Effizienz bzw. Zuverlässigkeit des Verfahrens beeinträchtigt.

## Aufgabe der Erfindung

Die vorliegende Erfindung hat sich daher die Aufgabe gestellt, ein Verfahren der eingangs erwähnten Art dahingehend zu verbessern, dass ein Echo bei der Wiedergabe von über einen Funkkanal gesendeten Funksignalen zuverlässig selbst dann reduziert oder vermieden wird, wenn das Funksignal von mehreren Basisstationen empfangen wird und die empfangenen Audiosignale zur Wiedergabe an eine Leitwarte gesendet werden und dort an unterschiedlichen Zeitpunkten eintreffen.

## Darstellung der Erfindung

Die Erfindung löst die gestellte Aufgabe durch ein Verfahren zur Beseitigung von Echo bei der Wiedergabe von über einen Funkkanal gesendeten Funksignalen, bei welchem Verfahren ein von einem Sender gesendetes Funksignal durch zumindest eine erste Basisstation als erstes Audiosignal und durch zumindest eine zweite Basisstation als zweites Audiosignal empfangen wird, die empfangenen Audiosignale über ein IP-Netzwerk zur Wiedergabe an eine Leitwarte gesendet werden, wobei das erste Audiosignal und das zweite Audiosignal zu unterschiedlichen Zeitpunkten oder mit einer Zeitverschiebung in der Leitwarte eintreffen und vor deren Wiedergabe in der Leitwarte eine Ähnlichkeitsanalyse durchlaufen.

Bei dem erfindungsgemäßen Verfahren zur Beseitigung von Echo bei der Wiedergabe von über einen Funkkanal gesendeten Funksignalen wird ein von einem Sender gesendetes Funksignal von mehreren Basisstationen gleichzeitig empfangen. Das Funksignal wird dabei von zumindest einer ersten Basisstation als erstes Audiosignal und von zumindest einer zweiten Basisstation als zweites Audiosignal empfangen und aufgezeichnet. Das aufgezeichnete erste Audiosignal und das aufgezeichnete zweite Audiosignal werden dann unabhängig voneinander jeweils über ein IP-Netzwerk an eine Leitwarte gesendet, in der das Funksignal wiedergegeben werden soll. Da das Senden der Audiosingale an die Leitwarte über das bzw. die IP-Netzwerke unterschiedlichen Latenz- bzw. Signallaufzeiten unterliegen kann, können das erste und zweite Audiosignal zu unterschiedlichen Zeitpunkten in der Leitwarte eintreffen bzw. können die beiden Audiosignale vor der Wiedergabe in der Leitwarte eine Zeitverschiebung zueinander aufweisen. Zur Vermeidung einer zeitversetzten Überlagerung des ersten und zweiten Audiosignals, wird zunächst vor der Wiedergabe der eingetroffenen Audiosignale eine Ähnlichkeitsanalyse der Audiosignale durchgeführt, bzw. durchlaufen zumindest das erste und zweite Audiosignal eine Ähnlichkeitsanalyse. Wird in der Ähnlichkeitsanalyse eine Ähnlichkeit zwischen erstem und zweitem Audiosignal festgestellt, so kann die Wiedergabe der Audiosignale derart erfolgen, dass das in den Audiosignalen enthaltene Funksignal ohne Echo wiedergegeben wird.

Im Allgemeinen wird festgehalten, dass die vorliegende Erfindung im Rahmen dieser Beschreibung exemplarisch anhand von zwei Basisstationen, insbesondere einer ersten und einer zweiten Basisstation, welche das Funksignal im Wesentlichen gleichzeitig empfangen, beschrieben wird. Die Beschreibung der Erfindung anhand zweier Basisstationen ist allerdings nicht als einschränkend zu verstehen. Die Erfindung eignet sich gleichermaßen auch für Verfahren, bei denen ein Funksignal durch drei oder mehr Basisstationen gleichzeitig empfangen wird, wobei das Funksignal dabei von einer ersten, zweiten, dritten, etc. Basisstation als erstes, zweites, drittes, etc. Audiosignal empfangen wird und die Audiosignale zur Wiedergabe an eine Leitstelle gesendet werden. In diesem Fall gilt das hier Gesagte sinngemäß auch für die über die zumindest erste und zweite Basisstationen hinausgehenden weiteren Basisstationen sowie für die über das erste und zweite Audiosignal hinausgehenden weiteren Audiosignale, die jeweils von den weiteren Basisstationen empfangen und aufgezeichnet werden.

Durch die erfindungsgemäße Ähnlichkeitsanalyse der an der Leitstelle eintreffenden Audiosignale kann zuverlässig festgestellt werden, ob die Audiosignale im Wesentlichen dasselbe Funksignal enthalten, so dass eine entsprechende Wiedergabe der Audiosignale ohne Überlagerungen bzw. ohne Echo an der Leitstelle erfolgen kann.

Die Ähnlichkeitsanalyse ist dabei vorzugsweise derart ausgebildet, dass eine Ähnlichkeit nur dann festgestellt wird, wenn die Audiosignale von demselben Funksignal stammen, also im Wesentlichen dasselbe Funksignal enthalten, und sich nur durch systembedingte Störungen, Überlagerungen, Rauschen, etc. unterscheiden.

Erfindungsgemäß wird davon ausgegangen, dass die von den unterschiedlichen Basisstationen parallel empfangenen Audiosignale von Funksignalen stammen, die auf demselben Funkkanal abgesetzt wurden. Gemäß einer Ausführungsvariante der Erfindung kann zusätzlich zu dem Funksignal selbst auch eine Information über den Funkkanal gesendet werden, auf dem das Funksignal gesendet bzw. empfangen wurde. Werden im Rahmen der Ähnlichkeitsanalyse beispielsweise zwei Audiosignale verglichen, die aus unterschiedlichen Funkkanälen stammen, so kann in der Regel davon ausgegangen werden, dass es sich um unterschiedliche, d.h. unähnliche Audiosignale handelt.

Gemäß einer weiteren Ausführungsvariante können allerdings ebenso Funksignale von unterschiedlichen Kanälen als Audiosignale parallel empfangen werden und in der Ähnlichkeitsanalyse verglichen werden. Dies kann insbesondere in Fällen vorteilhaft sein, in denen ein Funksignal gleichzeitig über mehrere Funkkanäle ausgesendet wird. Dadurch kann auch in einem solchen Fall sichergestellt werden, dass ohne Zeitverzögerung auf das Funksignal reagiert werden kann.

Gemäß einer vorteilhaften Ausführungsvariante des Verfahrens kann bei festgestellter Ähnlichkeit zwischen erstem und zweitem Audiosignal nur das erste Audiosignal und nicht das zweite Audiosignal, oder aber nur das zweite Audiosignal und nicht das erste Audiosignal wiedergegeben wird. Durch diese selektive Wiedergabe nur eines einzelnen der ähnlichen Audiosignale, welche im Wesentlichen dasselbe Funksignal enthalten, kann eine Echo-freie Wiedergabe auf verfahrenstechnisch besonders einfache Weise erfolgen.

Gemäß einer weiteren vorteilhaften Ausführungsvariante kann von dem ersten und zweiten Audiosignal ein Qualitätswert errechnet werden, wobei nur jenes Audiosignal mit dem besseren Qualitätswert wiedergegeben wird. Durch Ausgabe des Audiosignals mit dem besseren Qualitätswert kann stets sichergestellt werden, dass nur jenes Audiosignal mit der höheren Wahrscheinlichkeit für störungsfreie Wiedergabe ausgegeben wird. Dies kann sich insbesondere beim Empfang und der Wiedergabe von Notruf-Funksignalen vorteilhaft auszeichnen, da eine bessere Wiedergabe- oder Sprachqualität die Notwendigkeit von zusätzlichen Nachfragen oder wiederholender Kommunikation reduziert und somit die Reaktionszeit auf das Notruf-Funksignal verringert. Alternativ kann auch vorgesehen sein, dass das Audiosignal mit dem besseren Qualitätswert zuerst wiedergegeben wird und das Audiosignal mit dem schlechteren Qualitätswert, etwa zwecks inhaltlicher Überprüfung, zu einem späteren Zeitpunkt wiedergegeben oder zu einem solchen Zweck gespeichert wird.

Der Qualitätswert kann dabei insbesondere die Wiedergabequalität bzw. Klangqualität des Audiosignals widerspiegeln, wobei insbesondere Störungen, Überlagerungen, Übertragungsfehler, etc., zu einem geringeren bzw. schlechteren Qualitätswert führen können. Die Klangqualität kann dabei etwa eine Bewertung der Genauigkeit, Wiedergabetreue oder Verständlichkeit des Audiosignals bei Wiedergabe über ein elektronisches Gerät darstellen.

Zur Ermittlung des Qualitätswerts eignen sich eine Vielzahl von Verfahren, welche die Wiedergabe- oder Klangqualität des Audiosignals ermitteln oder abschätzen können. So kann der Qualitätswert beispielsweise durch Ermittlung des Rauschanteils am Audiosignal oder durch Vergleich mit einem Referenzsignal erfolgen.

Gemäß einer weiteren Ausführungsvariante kann bei Wiedergabe nur eines einzelnen Audiosignals, das andere Audiosignal für eine spätere Wiedergabe zwischengespeichert werden, so dass dieses im Bedarfsfall ebenso gesondert wiedergegeben werden kann. Dies kann insbesondere dann vorteilhaft sein, wenn das wiedergegebene Audiosignal Störungen enthält, welche eine vollständige und unterbrechungsfreie Wiedergabe des Funksignals nicht ermöglichen. Andererseits kann das andere, nicht wiedergegebene Audiosignal auch aus Sicherheitszwecken bzw. zur Evaluierung der Ähnlichkeitsanalyse gespeichert werden. So kann gemäß einer Ausführungsvariante nach Wiedergabe eines Audiosignals, das andere nicht wiedergegebene Audiosignal ebenfalls wiedergegeben werden, um die Ähnlichkeit der Audiosignale zu bestätigen bzw. um im Falle einer nachträglich festgestellten Unähnlichkeit eine gesonderte Wiedergabe zu ermöglichen.

Gemäß einer weiteren vorteilhaften Ausführungsvariante können bei festgestellter Ähnlichkeit zwischen erstem und zweitem Audiosignal das erste und zweite Audiosignal überlagert ausgegeben werden. Durch die überlagerte Ausgabe der Audiosignale kann stets sichergestellt werden, dass die gesamte in beiden Audiosignalen enthaltene Information wiedergegeben wird, etwa auch wenn Informationen in dem ersten Audiosignal durch Störungen überlagert sind und nur in dem zweiten Audiosignal enthalten sind, oder umgekehrt. Auf verfahrenstechnisch einfache Weise kann somit eine zuverlässige Wiedergabe von parallel aufgezeichneten Audiosignalen erfolgen. Insbesondere beim Empfang von Notrufen kann sich das erfindungsgemäße Verfahren dadurch auszeichnen, dass eine schnellere Reaktion auf das Funksignal mit verminderter Notwendigkeit für Nachfragen ermöglicht wird.

Insbesondere kann vor der überlagerten Ausgabe des ersten und zweiten Audiosignals ein etwaiger Zeitversatz des in den Audiosignalen enthaltenen Funksignals entfernt oder vermindert werden, so dass die überlagerten Audiosignale synchronisiert wiedergegeben werden und die Wiedergabe ohne Echo erfolgt.

Gemäß einer weiteren Ausführungsvariante der Erfindung kann in der Ähnlichkeitsanalyse eine zeitabhängige Kreuzkorrelation zwischen erstem und zweitem Audiosignal errechnet werden und bei Vorhandensein eines Maximalstelle der Kreuzkorrelation bei Zeitverschiebungen zwischen 0 ms und 1000 ms, insbesondere zwischen 2 ms und 500 ms, besonders bevorzugt zwischen 5 ms und 200 ms, eine Ähnlichkeit festgestellt werden. Durch das Berechnen einer zeitabhängigen Kreuzkorrelation im Rahmen der Ähnlichkeitsanalyse kann auf verfahrenstechnisch einfache Weise eine Ähnlichkeit zwischen dem ersten und zweiten Audiosignal bestimmt werden. Zudem kann die Ähnlichkeitsanalyse dabei mit geringem Rechenaufwand effizient durchgeführt werden und somit die Latenzzeiten bzw. Verzögerungen bei der Wiedergabe der Audiosignale reduziert werden und insgesamt die Reaktionszeiten des gesamten Verfahrens geringgehalten werden.

Die diskrete zeitabhängige Kreuzkorrelationsfunktion $R_{xy}[\tau]$ zweier zeitabhängiger diskreter Signale $x[t]$ und $y[t]$ ist gemäß Formel (1) definiert:

$$R_{xy}[\tau] = (x * y)[\tau] = \sum_{t=-\infty}^{\infty} x^*[t]\, y[t+\tau], \qquad (1)$$

wobei $\tau$ die Zeitverschiebung zwischen Signal $x[t]$ und Signal $y[t]$ angibt. Die Kreuzkorrelationsfunktion $R_{xy}[\tau]$ wird dabei - wie oben beschrieben - bevorzugt für alle Zeitverschiebungen $\tau$ zwischen 0 ms und 1000 ms, insbesondere zwischen 2 ms und 500 ms, besonders bevorzugt zwischen 5 ms und 200 ms, berechnet. In einem weiteren Schritt werden nun Peaks in der Kreuzkorrelationsfunktion $R_{xy}[\tau]$ identifiziert und den entsprechenden Zeitverschiebungswerten $\tau_p$ zugeordnet, wobei der Zeitverschiebungswert $\tau_p$, bei welchem ein Maximum in der Kreuzkorrelationsfunktion $R_{xy}[\tau]$ identifiziert wird, angibt, um welche Zeitverschiebung die Signale $x[t]$ und $y[t]$ zueinander verschoben sind. Als Signale $x[t]$ und $y[t]$ werden im Rahmen des erfindungsgemäßen Verfahrens die von den Basisstationen empfangenen Audiosignale verwendet.

Gemäß einer weiteren Ausführungsvariante des Verfahrens können jeweils Hüllkurven des ersten und zweiten Audiosignals zur Berechnung der Kreuzkorrelation herangezogen werden. Durch die Verwendung von Hüllkurven kann der Rechenaufwand des Verfahrens weiter verringert werden. Die Hüllkurven können dabei verfahrenstechnisch einfach durch Anwendung eines Tiefpassfilters und/oder einer Hilbert-Transformation auf die Audiosignale erhalten werden. Ein zuverlässiges und reaktionsschnelles Verfahren kann somit geschaffen werden. In diesem Fall werden die Hüllkurven der Audiosignale als Signale $x[t]$ und $y[t]$ zur Berechnung der Kreuzkorrelationsfunktion $R_{xy}[\tau]$ herangezogen. Gemäß einer weiteren Ausführungsvariante des Verfahrens kann in der Ähnlichkeitsanalyse festgestellt werden, ob sich die Empfangsgebiete der ersten und zweiten Basisstation überschneiden. Dabei werden insbesondere die miteinander zu vergleichenden Audiosignale anhand von sich überschneidenden Empfangsgebieten ausgewählt, wobei davon ausgegangen wird, dass keine Ähnlichkeit zwischen Audiosignalen besteht, welche zwar im Wesentlichen zeitgleich von unterschiedlichen Basisstationen aufgenommen wurden, die Basisstationen allerdings sich nicht überschneidenden Empfangsgebieten zugeordnet sind. Auf diese Weise kann eine Vorauswahl in der Ähnlichkeitsanalyse auf potentiell ähnliche Audiosignale erfolgen und so die Effizienz des Verfahrens deutlich gesteigert werden und der Rechenaufwand der Ähnlichkeitsanalyse verringert werden.

Die der Erfindung zugrundeliegende Aufgabe wird zudem durch ein System gemäß Anspruch 8 gelöst. Auf dieses System treffen die vorstehend erläuterten Vorteile sinngemäß zu.

Insbesondere weist das erfindungsgemäße System zumindest eine erste und eine zweite Basisstation auf. Ein über einen Funkkanal gesendetes Funksignal kann somit von der ersten Basisstation als erstes Audiosignal empfangen werden und von der zweiten Basisstation als zweites Audiosignal empfangen werden, vorausgesetzt die beiden Basisstationen haben einen überlappenden Empfangsbereich, in dem sich der Sender des Funksignals befindet. Die beiden Basisstationen sind dabei über zumindest ein IP-Netzwerk mit einer Leitwarte verbunden, wobei die Basisstationen entweder jeweils über getrennte IP-Netzwerke oder über ein gemeinsames IP-Netzwerk mit der Leitwarte verbunden sein können. Die Leitwarte ist dabei dazu ausgebildet, die von den Basisstationen aufgezeichneten Audiosignale wiederzugeben. Das System weist weiters eine Analyseeinheit zur Ähnlichkeitsanalyse zwischen erstem und zweitem Audiosignal auf, wobei die Analyseeinheit dazu programmiert ist das zuvor beschriebene erfindungsgemäße Verfahren, insbesondere gemäß einem der Ansprüche 1 bis 7, auszuführen.

Durch die entsprechend programmierte Analyseeinheit kann somit eine Ähnlichkeitsanalyse der von den Basisstationen empfangenen Audiosignale erfolgen, womit eine Echo-freie Wiedergabe der Audiosignale in der Leitwarte ermöglicht wird.

## Kurzbeschreibung der Figuren

Im Folgenden werden bevorzugte Ausführungsvarianten der Erfindung anhand der Zeichnungen näher dargestellt. Es zeigen:

Fig. 1 eine schematische Ansicht eines erfindungsgemäßen Systems bzw. des erfindungsgemäßen Verfahrens gemäß einer ersten Ausführungsvariante anhand zweier Küstenlinien mit mehreren Basisstationen zum Empfang von Funksignalen,

Fig. 2 eine weitere schematische Darstellung des erfindungsgemäßen Systems bzw. des erfindungsgemäßen Verfahrens gemäß Fig. 1,

Fig. 3 eine schematische Darstellung der von Basisstationen empfangenen Audiosignale sowie der Berechnung der Korrelationsfunktion daraus im Rahmen des erfindungsgemäßen Verfahrens gemäß der Fig. 1 und 2, und

Fig. 4 eine Tabelle zur Darstellung der Überlappungsbereiche zwischen den Empfangsbereichen der Basisstationen in dem erfindungsgemäßen System gemäß Fig. 1.

## Wege zur Ausführung der Erfindung

Das erfindungsgemäße Verfahren 100 wird im Folgenden anhand der in den Figuren gezeigten Ausführungsvarianten exemplarisch beschrieben. Ebenso zeigen die Figuren ein erfindungsgemäßes System 200, mittels dem das erfindungsgemäße Verfahrens 100 durchgeführt werden kann.

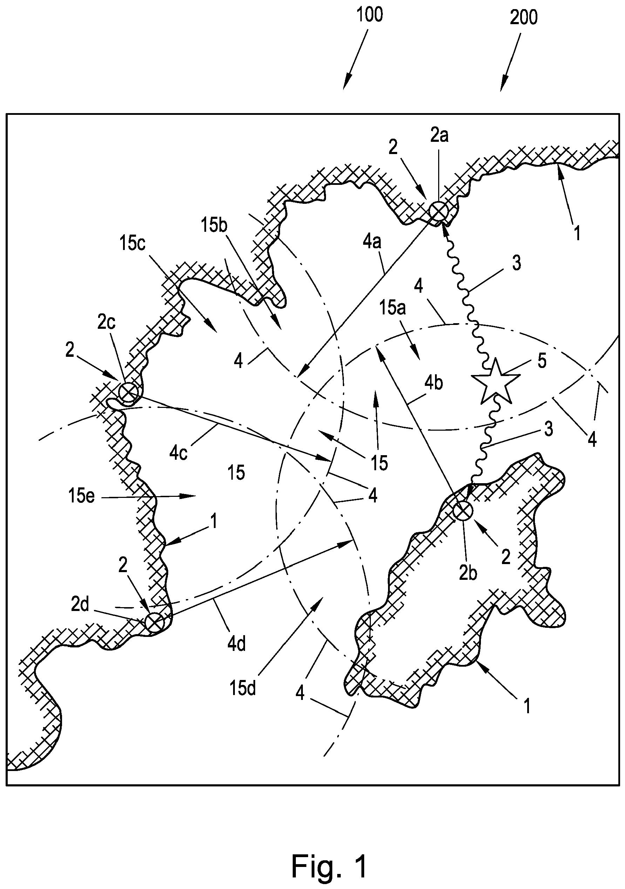

In Fig. 1 zeigt eine schematische Ansicht des Systems 200, wobei entlang zweier Küstenlinien 1 mehrere Basisstationen 2 zum Empfang von Funksignalen 3 angeordnet sind. Die Basisstationen 2 decken dabei jeweils entsprechende Empfangsbereiche 4 ab, wobei die von einem Sender 5, etwa einem Schiff, ausgesendeten Funksignale 3 von jenen Basisstationen empfangen werden können, in deren Empfangsbereich 4 sich der Sender 5 befindet.

Wie in Fig. 1 exemplarisch gezeigt, sind entlang der Küstenlinien 1 vier Basisstationen 2, insbesondere eine erste Basisstation 2a, eine zweite Basisstation 2b, eine dritte Basisstation 2c und eine vierte Basisstation 2d, angeordnet. Der ersten Basisstation 2a ist demgemäß ein erster Empfangsbereich 4a, der zweiten Basisstation 2b ein zweiter Empfangsbereich 4b, der dritten Basisstation 2c ein dritter Empfangsbereich 4c und der vierten Basisstation 2d ein vierter Empfangsbereich 4d zugeordnet.

Ein Sender 5 befindet sich dabei zugleich im ersten Empfangsbereich 4a der ersten Basisstation 2a und im zweiten Empfangsbereich 4b der zweiten Basisstation 2b. Das von dem Sender 5 ausgesandte Funksignal 3 wird daher im Wesentlichen zur selben Zeit von der ersten Basisstation 2a als erstes Audiosignal 6a und von der zweiten Basisstation 2b als zweites Audiosignal 6b empfangen.

Gemäß einer weiteren Ausführungsvariante der Erfindung kann sich der Sender 5 ebenso im Empfangsbereich 4 von mehr als zwei Basisstationen 2 befinden und somit das Funksignal 3 auch gleichzeitig von mehr als zwei Basisstationen 2 empfangen werden, was in den Figuren aber nicht dargestellt ist. So ist beispielsweise ebenso vorstellbar, dass sich der Sender 5 zugleich im Empfangsbereich 4a der ersten Basisstation 2a, im Empfangsbereich 4b der zweiten Basisstation 2b und im Empfangsbereich 4c der dritten Basisstation 2c befindet. In weiterer Folge wird die Erfindung allerdings lediglich anhand der in Fig. 1 gezeigten Situation exemplarisch beschrieben, was allerdings nicht einschränkend auszulegen ist.

Das erste und zweite Audiosignal 6a, 6b enthalten dabei das von der ersten und zweiten Basisstation 2a, 2b empfangene und von dem Sender 5 ausgesandte Funksignal 3. Das Funksignal 3 kann dabei gemäß einer Ausführungsvariante einen Funkspruch, wie beispielsweise einen Notruf-Funkspruch, enthalten. In einer alternativen Ausführungsvariante kann das Funksignal 3 auch ein Morsecode- oder ein Datenfunksignal sein.

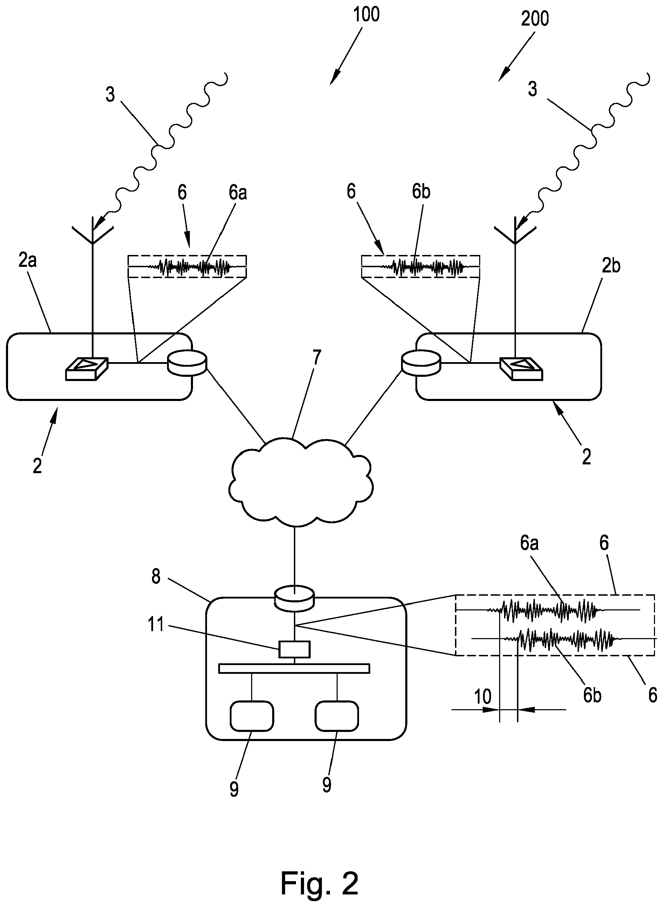

Fig. 2 zeigt weiters eine schematische Ansicht des erfindungsgemäßen Systems 200, in welchem die Anbindung der Basisstationen 2 über ein IP-Netzwerk 7 an eine Leitwarte 8 erfolgt.

Wie in Fig. 2 dargestellt, wird das Funksignal 3 in den Basisstationen 2 empfangen und in ein vorzugsweise digitales Audiosignal 6 umgewandelt. Die Audiosignale 6, bzw. insbesondere das erste Audiosignal 6a und das zweite Audiosignal 6b werden dann zur Wiedergabe an eine Leitwarte 8 gesendet. Dazu sind sowohl die Basisstationen 2, als auch die Leitwarte 8, an ein IP-Netzwerk 7 angebunden. Die Leitwarte 8 selbst kann dabei mehrere Leitwartenplätze 9 aufweisen, an denen die Audiosignale 6 an eine Bedienperson wiedergegeben werden.

Wie in Fig. 2 weiter dargestellt, treffen das erste und zweite Audiosignal 6a, 6b in der Leitwarte 8 zu unterschiedlichen Zeitpunkten ein, bzw. weisen die Audiosignale 6 gegeneinander eine Zeitverschiebung 10 auf. Wie beispielhaft in Fig. 2 gezeigt, ist das zweite Audiosignal 6b gegenüber dem ersten Audiosignal 6a um die Zeitverschiebung 10 zeitverzögert in der Leitwarte 8 eingetroffen. Bei gleichzeitiger (unbearbeiteter) Wiedergabe des ersten und zweiten Audiosignals 6a, 6b an einem Leitwartenplatz 9 in der Leitwarte 8 wird durch die Zeitverschiebung 10 ein Echo zwischen erstem und zweitem Audiosignal 6a, 6b erzeugt, welches die Wiedergabequalität negativ beeinflusst.

Gemäß der bevorzugten Ausführungsvariante des Verfahrens 100 durchlaufen die Audiosignale 6 vor der Wiedergabe in der Leitwarte 8 eine Analyseeinheit 11 des Systems 200, in welchem eine Ähnlichkeitsanalyse zwischen den einlangenden Audiosignalen 6 durchgeführt wird. So kann bei festgestellter Ähnlichkeit zwischen erstem und zweitem Audiosignal 6a, 6b die Wiedergabe der Audiosignale 6 an einem Leitwartenplatz 9 derart erfolgen, dass das Echo reduziert bzw. eliminiert wird.

Gemäß der bevorzugten Ausführungsvariante der Erfindung dient die Ähnlichkeitsanalyse, welche in der Analyseeinheit 11 ausgeführt wird, der Feststellung, ob das erste und zweite Audiosignal 6a, 6b im Wesentlichen dasselbe Funksignal 3 enthalten, obwohl diese von unterschiedlichen Basisstationen 2 aufgezeichnet wurden. Auch wenn die Audiosignale 6a, 6b von demselben Funksignal 3 stammen, können diese dennoch durch enthaltene Störungen, wie etwa Signalüberlagerungen, Rauschen, etc., voneinander abweichen. Eine solche Abweichung führt dennoch zu der Feststellung, dass eine Ähnlichkeit zwischen den Audiosignalen 6a, 6b besteht.

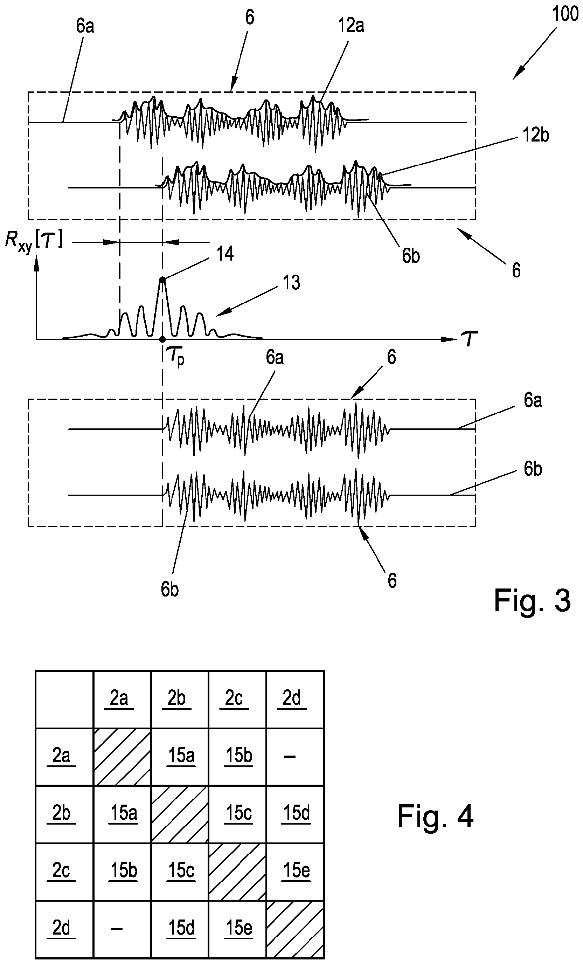

Die Ähnlichkeitsanalyse der Audiosignale 2 ist näher anhand von Fig. 3 dargestellt. Dazu werden gemäß der bevorzugten Ausführungsvariante eine erste Hüllkurve 12a des ersten Audiosignals 6a und eine zweite Hüllkurve 12b des zweiten Audiosignals 6b berechnet. Gemäß einer Ausführungsvariante können die Hüllkurven rechnerisch einfach durch Anwendung eines Tiefpassfilters und/oder einer Hilbert-Transformation auf das jeweilige Audiosignal 6a, 6b erfolgen.

Gemäß der bevorzugten Ausführungsvariante wird in einem weiteren Schritt aus den Hüllkurven 12a, 12b des ersten und zweiten Audiosignals 6a, 6b eine zeitabhängige Kreuzkorrelation 13 errechnet. Die Berechnung der Kreuzkorrelationsfunktion $R_{xy}[\tau]$ erfolgt dabei wie weiter oben beschrieben anhand der Formel (1) aus der Hüllkurve des ersten Audiosignals 6a als zeitabhängiges Signal $x[t]$ und aus der Hüllkurve des zweiten Audiosignals 6b als zeitabhängiges Signal $y[t]$. Wie in Fig. 3 dargestellt, weist die Kreuzkorrelation 13 bei einer Zeitverschiebung $\tau_p$, welche der Zeitverschiebung 10 zwischen erstem und zweitem Audiosignal 6a, 6b entspricht, eine Maximalstelle der Kreuzkorrelation 14 auf. Das Vorhandensein des Peaks 14 lässt auf eine Korrelation und somit auf eine Ähnlichkeit der Audiosignale 6a, 6b, sowie auf eine Zeitverschiebung $\tau_p$ zwischen den Audiosignalen 6a, 6b schließen. Die Kreuzkorrelationsfunktion $R_{xy}[\tau]$ kann vorteilhafterweise mit geringem Rechenaufwand berechnet werden und somit eine computergestützte Ähnlichkeitsanalyse mit kurzen Reaktionszeiten ermöglichen.

In einer alternativen Ausführungsvariante kann zur Berechnung der Kreuzkorrelationsfunktion $R_{xy}[\tau]$ das erste Audiosignal 6a selbst als Signal $x[t]$ und das zweiten Audiosignal 6b selbst als Signal $y[t]$ verwendet werden.

Beispielsweise wird im Rahmen des Verfahrens 100 eine Ähnlichkeit zwischen den Audiosignalen 6a, 6b nur dann festgestellt, wenn die Maximalstelle der Kreuzkorrelation 14 bei Zeitverschiebungen ($\tau_p$) 10 zwischen 0 ms und 1000 ms liegt. Gemäß einer bevorzugen Ausführungsvariante muss zur Feststellung der Ähnlichkeit der Maximalstelle der Kreuzkorrelation 14 bei Zeitverschiebungen 10 zwischen 2 ms und 500 ms liegen. Es kann aber auch gefordert werden, dass zur Feststellung der Ähnlichkeit der Maximalstelle der Kreuzkorrelation 14 bei Zeitverschiebungen 10 zwischen 5 ms und 200 ms liegen muss.

Gemäß einer weiteren Ausführungsvariante des Verfahrens 100, wird im Falle einer durch die Analyseeinheit 11 festgestellten Ähnlichkeit zwischen erstem und zweitem Audiosignal 6a, 6b lediglich eines der beiden Audiosignale 6a, 6b in der Leitwarte 8 wiedergegeben. Derart kann eine Überlagerung der durch die Zeitverschiebung 10 zeitversetzten Audiosignale 6a, 6b vermieden werden, wodurch bei der Wiedergabe auch kein Echo entsteht. So wird gemäß einer Ausführungsvariante lediglich das erste Audiosignal 6a wiedergegeben, während das zweite Audiosignal 6b zwischengespeichert wird und bei Bedarf zu einem späteren Zeitpunkt wiedergegeben werden kann.

Gemäß einer weiteren Ausführungsvariante des Verfahrens 100, welche in den Figuren jedoch nicht näher dargestellt wurde, wird das Funksignal 3 von mehr als zwei Basisstationen 2 als Audiosignale 6 aufgezeichnet wird und an die Leitwarte 8 weitergeleitet. Das Funksignal 3 wird dabei beispielsweise - ähnlich wie zuvor beschrieben - sowohl von der ersten und zweiten Basisstation 2a, 2b als erstes und zweites Audiosignal 6a, 6b empfangen, als auch von einer dritten Basisstation 2c als drittes Audiosignal empfangen. Die Audiosignale 6 werden dann wiederum an die Leitwarte 8 über das IP-Netzwerk 7 weitergeleitet und treffen dort zu unterschiedlichen Zeitpunkten ein. So weisen erstes und zweites Audiosignal 6a, 6b - wie in Fig. 2 gezeigt - eine Zeitverschiebung 10 zueinander auf. Ebenso weisen das erste Audiosignal 6a und das dritte Audiosignal als auch das zweite Audiosignal 6b und das dritte Audiosignal jeweils eine Zeitverschiebung zueinander auf, was in den Figuren jedoch nicht näher dargestellt wurde.

Zur Feststellung der Ähnlichkeit zwischen den Audiosignalen 6 wird die Kreuzkorrelationsfunktion zwischen allen Audiosignalen 6 berechnet und somit durch Identifizierung der entsprechenden Maximalstelle der Kreuzkorrelation die jeweiligen Zeitverschiebungen zwischen den drei Audiosignalen 6 ermittelt.

In der Leitwarte 8 wird sinngemäß zu der oben beschriebenen Ausführungsvariante dann im Falle einer festgestellten Ähnlichkeit zwischen dem ersten, zweiten und dritten Audiosignal 6a, 6b lediglich eines der drei Audiosignale 6 wiedergegeben. Die jeweils anderen beiden Audiosignale 6 können dann wiederum zwischengespeichert werden und gegebenenfalls später gesondert wiedergegeben werden.

Gemäß einer weiteren Ausführungsvariante des Verfahrens 100 kann im Zuge der Ähnlichkeitsanalyse in der Analyseeinheit weiters ein Qualitätswert der Audiosignale 6 errechnet werden. Der Qualitätswert kann dabei ein Maß für die Wiedergabe- und/oder Sprachqualität des jeweiligen Audiosignals 6 sein, wodurch in der Ähnlichkeitsanalyse jenes Audiosignal 6 zur Ausgabe in der Leitwarte 8 ausgewählt werden kann, welches den besten Qualitätswert aufweist. Durch Vorauswahl des auszugebenden Audiosignals 6 anhand eines Qualitätswerts, kann jenes Signal mit der objektiv besten Qualität ausgegeben werden, wodurch die Wahrscheinlichkeit einer störungsfreien Wiedergabe in der Leitwarte 8 erhöht wird.

Gemäß einer weiteren Ausführungsvariante des Verfahrens 100, werden im Falle einer durch die Analyseeinheit 11 festgestellten Ähnlichkeit zwischen erstem und zweitem Audiosignal 6a, 6b, das erste und zweite Audiosignal 6a, 6b überlagert ausgegeben. Insbesondere wird dazu vor der überlagerten Ausgabe der Audiosignale 6a, 6b in der Leitwarte 8 die Zeitverschiebung 10 zwischen den Audiosignalen 6 entfernt, so dass diese synchron zueinander wiedergegeben werden. Durch die synchron überlagerte Wiedergabe der Audiosignale 6 kann die Bildung eines Echos vermieden und eine Wiedergabe mit hoher Qualität ermöglicht werden.

Wie in Fig. 3 gezeigt, wird gemäß einer Ausführungsvariante des Verfahrens 100 die Zeitverschiebung 10 zwischen erstem und zweitem Audiosignal 6a, 6b als jene Zeitverschiebung $\tau_p$ an der Position der Maximalstelle der Kreuzkorrelation 14 der Kreuzkorrelation 13 zwischen erstem und zweitem Audiosignal 6a, 6b ermittelt. Durch Verzögerung des ersten Audiosignals 6a um die Zeitverschiebung 10 kann dieses mit dem zweiten Audiosignal 6b auf verfahrenstechnisch einfache Weise synchronisiert werden.

Gemäß einer weiteren Ausführungsvariante des Verfahrens 100 kann im Rahmen der Ähnlichkeitsanalyse in der Analyseeinheit 11 festgestellt werden, ob sich die Empfangsgebiete 4 der Basisstationen 2 überschneiden. Dies kann, wie in Fig. 4 dargestellt, auf einfache Weise anhand einer Tabelle erfolgen, welche die Überlappungsbereiche 15 der Empfangsgebiete 4 abbildet.

So zeigt die Tabelle in Fig. 4 beispielhaft die Überlappungsbereiche 15 der Basisstationen 2 gemäß Fig. 1. Die erste Basisstation 2a besitzt demgemäß mit der Basisstation 2b einen gemeinsamen Überlappungsbereich 15a. Die erste Basisstation 2a besitzt zudem mit der dritten Basisstation 2c einen Überlappungsbereich 15b. Mit der vierten Basisstation 2d besitzt die erste Basisstation 2a hingegen keinen Überlappungsbereich 15. Die zweite Basisstation 2b wiederum besitzt mit der dritten Basisstation 2c einen Überlappungsbereich 15c und mit der vierten Basisstation 2d einen Überlappungsbereich 15d. Die dritte Basisstation 2c besitzt schließlich noch mit der vierten Basisstation 2d einen gemeinsamen Überlappungsbereich 15e.

Wird nun von der ersten Basisstation 2a ein erstes Audiosignal 6a und von der zweiten Basisstation 2b ein zweites Audiosignal 6b empfangen, so kann gemäß der Tabelle in Fig. 4 festgestellt werden, dass die erste Basisstation 2a und die zweite Basisstation 2b einen Überlappungsbereich 15a besitzen. Somit muss eine Ähnlichkeitsanalyse zwischen erstem und zweitem Audiosignal 6a, 6b durchgeführt werden, beispielsweise durch Berechnung der Kreuzkorrelation 13 wie zuvor beschrieben. Würde auf der anderen Seite ein erstes Audiosignal 6a von der ersten Basisstation 2a empfangen und ein weiteres Audiosignal 6 von der vierten Basisstation 2d empfangen, so kann anhand der Tabelle in Fig. 4 bereits festgestellt werden, dass die erste und vierte Basisstation 2a, 2d keinen Überlappungsbereich 15 besitzen und die Audiosignale 6 somit nicht ähnlich sein können, also nicht dasselbe Funksignal 3 enthalten können. In diesem Fall kann auf eine Berechnung der Kreuzkorrelation 13 zwischen den Audiosignalen 6 verzichtet werden, wodurch das erfindungsgemäße Verfahren 100 deutlich in seiner Effizienz und Reaktionszeit verbessert werden kann.

**Patentansprüche**

1. Verfahren (100) Beseitigung von Echo bei der Wiedergabe von über einen Funkkanal gesendeten Funksignalen (3), bei welchem Verfahren (100) ein von einem Sender (5) gesendetes Funksignal (3) durch zumindest eine erste Basisstation (2a) als erstes Audiosignal (6a) und durch zumindest eine zweite Basisstation (2b) als zweites Audiosignal (6b) empfangen wird, die empfangenen Audiosignale (6, 6a, 6b) über ein IP-Netzwerk (7) zur Wiedergabe an eine Leitwarte (8) gesendet werden, wobei das erste Audiosignal (6a) und das zweite Audiosignal (6b) zu unterschiedlichen Zeitpunkten oder mit einer Zeitverschiebung (10) in der Leitwarte (8) eintreffen und vor deren Wiedergabe in der Leitwarte (8) eine Ähnlichkeitsanalyse durchlaufen, um bei festgestellter Ähnlichkeit zwischen erstem Audiosignal (6a) und zweitem Audiosignal (6b) das in beiden Audiosignalen (6) enthaltene Funksignal (3) ohne Echo wiederzugeben.

2. Verfahren (100) nach Anspruch 1, **dadurch gekennzeichnet, dass** bei festgestellter Ähnlichkeit zwischen erstem und zweitem Audiosignal (6a, 6b) nur das erste Audiosignal (6a) oder nur das zweite Audiosignal (6b) wiedergegeben wird.

3. Verfahren (100) nach Anspruch 2, **dadurch gekennzeichnet, dass** von dem ersten und zweiten Audiosignal (6a, 6b) jeweils ein Qualitätswert errechnet wird, wobei nur jenes Audiosignal (6, 6a, 6b) mit dem besseren Qualitätswert wiedergegeben wird.

4. Verfahren (100) nach Anspruch 1, **dadurch gekennzeichnet, dass** bei festgestellter Ähnlichkeit zwischen erstem und zweitem Audiosignal (6a, 6b) das erste und zweite Audiosignal (6a, 6b) überlagert und/oder synchronisiert wiedergegeben werden.

5. Verfahren (100) nach einem der Ansprüche 1 bis 4, **dadurch gekennzeichnet, dass** in der Ähnlichkeitsanalyse eine zeitabhängige Kreuzkorrelation (13) zwischen erstem und zweitem Audiosignal (6a, 6b) errechnet wird und bei Vorhandensein einer Maximalstelle der Kreuzkorrelation (14) bei Zeitverschiebungen (10) zwischen 0 ms und 1000ms, insbesondere zwischen 2 ms und 500 ms, besonders bevorzugt zwischen 5 ms und 200 ms, eine Ähnlichkeit festgestellt wird.

6. Verfahren (100) nach Anspruch 5, **dadurch gekennzeichnet, dass** jeweils Hüllkurven (12a, 12b) des ersten und zweiten Audiosignals (6a, 6b) zur Berechnung der Kreuzkorrelation (13) herangezogen werden, wobei die Hüllkurven (12a, 12b) vorzugsweise durch Anwendung eines Tiefpassfilters und/oder einer Hilbert-Transformation auf die Audiosignale (6, 6a, 6b) erhalten werden.

7. Verfahren (100) nach einem der Ansprüche 1 bis 6, **dadurch gekennzeichnet, dass** in der Ähnlichkeitsanalyse festgestellt wird, ob sich die Empfangsgebiete (4, 4a, 4b, 4c, 4d) der ersten und zweiten Basisstation (2a, 2b) überschneiden.

8. System (200), aufweisend zumindest eine erste Basisstation (2a) und eine zweite Basisstation (2b) zum Empfang zumindest eines über einen Funkkanal gesendeten Funksignals (3) als jeweils erstes und zweites Audiosignal (6a, 6b), und zumindest eine mit der ersten und zweiten Basisstation (2a, 2b) über zumindest ein IP-Netzwerk (7) verbundene Leitwarte (8) zur Wiedergabe der Audiosignale (6a, 6b), wobei das System (200) eine Analyseeinheit (11) zur Ähnlichkeitsanalyse zwischen erstem und zweitem Audiosignal (6a, 6b) aufweist, welche Analyseeinheit (11) dazu programmiert ist ein Verfahren (100) gemäß einem der Ansprüche 1 bis 7 auszuführen.

Fig. 1

Fig. 2

Fig. 3

Fig. 4

Europäisches
Patentamt

European
Patent Office

Office européen
des brevets

## EUROPÄISCHER RECHERCHENBERICHT

**Nummer der Anmeldung**

EP 22 21 1449

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2010/201824 A1 (WEI JEFF [CA]) 12. August 2010 (2010-08-12) * Absatz [0002] - Absatz [0007] * * Absatz [0074] - Absatz [0084]; Anspruch 1 * | 1-8 | INV. H04B7/015 H04J3/06 |
| | ----- | | |
| Y | US 2005/096899 A1 (PADHI KABI P [SG] ET AL) 5. Mai 2005 (2005-05-05) * Absatz [0017]; Ansprüche 1,2,3 * | 1-8 | |
| | ----- | | |
| A | DE 10 2005 041653 A1 (BOSCH GMBH ROBERT [DE]) 8. März 2007 (2007-03-08) * Absatz [0030] - Absatz [0033]; Ansprüche 1,3 * | 1-8 | |
| | ----- | | |

**RECHERCHIERTE SACHGEBIETE (IPC)**

H04B
H04L
H04J

Der vorliegende Recherchenbericht wurde für alle Patentansprüche erstellt

| Recherchenort | Abschlußdatum der Recherche | Prüfer |
|---|---|---|
| München | 21. April 2023 | Schiffer, Andrea |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.......................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 21 1449

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-2023

| Im Recherchenbericht angeführtes Patentdokument | Datum der Veröffentlichung | Mitglied(er) der Patentfamilie | Datum der Veröffentlichung |
|---|---|---|---|
| US 2010201824 A1 | 12-08-2010 | KEINE | |
| US 2005096899 A1 | 05-05-2005 | KEINE | |
| DE 102005041653 A1 | 08-03-2007 | DE 102005041653 A1<br>WO 2007025813 A1 | 08-03-2007<br>08-03-2007 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 522205 A1